Europäisches Patentamt

European Patent Office

Office européen des brevets

Veröffentlichungsnummer: **0 285 009**
**A2**

# EUROPÄISCHE PATENTANMELDUNG

Anmeldenummer: 88104778.1

Int. Cl.⁴ **C12C 13/02**

Anmeldetag: 24.03.88

Priorität: 03.04.87 DE 3711251

Veröffentlichungstag der Anmeldung:
05.10.88 Patentblatt 88/40

Benannte Vertragsstaaten:
AT BE CH DE FR GB IT LI

Anmelder: Anton Steinecker Maschinenfabrik
GmbH
Münchenerstrasse 18
D-8050 Freising(DE)

Erfinder: **Fischer, Johann**
**15 Palzingersrasse**
**D-8015 Zolling(DE)**

Vertreter: **Patentanwälte Grünecker,**
**Kinkeldey, Stockmair & Partner**
**Maximilianstrasse 58**
**D-8000 München 22(DE)**

**Brauereianlage.**

Die Erfindung bezieht sich auf eine Brauereianlage mit einer Würzepfanne, mit einem Wärmetauscher zum Aufheizen der der Würzepfanne zugeführten Läuterwürze und mit einer Heizeinrichtung zum Aufheizen eines Heizmediums, das im Wärmetauscher zur Aufheizung der Läuterwürze dient.

Um eine Anlage dieser Art mit einem variabel einsetzbaren und Energie sparenden Energieversorgungssystem auszustatten, ist die Brauereianlage dadurch gekennzeichnet, daß als Heizeinrichtung ein über einen Verbrennungsmotor angetriebene Kraftwärmekopplungsanlage vorgesehen ist.

EP 0 285 009 A2

## Brauereianlage

Die Erfindung betrifft eine Brauereianlage mit einer Würzepfanne, mit einem Wärmetauscher zum Aufheizen der der Würzepfanne zugeführten Läuterwürze und mit einer Heizeinrichtung zum Aufheizen eines Heizmediums, das im Wärmetauscher zur Aufheizung der Läuterwürze dient.

Brauereianlagen dieser Art sind bekannt. Die Würzepfanne dient bei solchen Anlagen dazu, die zuvor in einem Läuterbottich oder einem Maischefilter gewonnene Läuterwürze (Pfannenvollwürze) zu kochen, um so durch Verdampfung des überschüssigen Wassers eine gewünschte Würzekonzentration, Zerstörung von Enzymen und Sterilisierung der Würze zu erreichen. Außerdem werden dabei die Hopfenwertbestandteile in der Würze gelöst, vor allem die Hopfenbitterstoffe.

Im Anschluß an das Kochen wird die Würze gekühlt. Hierbei wird die Temperatur der Würze auf das für die Gärung erforderliche Niveau von 4 bis 20°C abgesenkt.

Es ist also einerseits die Aufheizung der Würze erforderlich, wobei die dazu erforderlichen Leitungen und Aggregate kurz mit dem Stichwort 'Wärmeseite der Brauereianlage zusammengefaßt werden können, während andererseits die Würze nach dem Kochen abgekühlt werden muß. Diese Seite kann als Kälteseite der Brauereianlage bezeichnet werden.

Um die Würze auf der Wärmeseite der Anlage aufzuheizen, sind im Stand der Technik verschiedene Vorrichtungen als Heizeinrichtungen eingesetzt worden. Bei einer bekannten Lösung wird die Würze mit Heißdampf oder Heißwasser aus einer Kesselanlage auf Kochtemperatur gebracht. Bei einer anderen Variante wird die Wärme der Kochbrüden, die bei der Würzekochung entstehen, dazu verwendet, um über ein Speichersystem mit dem Wärmeträger Wasser die Würze aufzuheizen. Das erfolgt über einen Brüdenkondensator. Das Wasser von 90° - 97° C tritt beispielsweise in einen Wärmetauscher ein, wobei dann durch Wärmeabgabe an die ebenfalls durch den Wärmetauscher geführte Würze die Würzeaufheizung stattfindet.

Bei dieser Art der Aufheizung der Würze ist es jedoch aufgrund von Übertragungsverlusten nur möglich, die Läuterwürze auf maximal 92° C vorzuheizen. Es wird dann in der Würzepfanne durch dort beispielsweise am Boden angebrachte Heizeinrichtungen der weitere Eintrag von Wärmeenergie erforderlich, um die Würze auf die erforderliche Kochtemperatur weiter aufzuheizen.

Der Erfindung liegt die Aufgabe zugrunde, eine im Hinblick auf ihre Energieregelung und ihren Betrieb verbesserte Brauereianlage der eingangs genannten Art zu schaffen.

Gelöst wird diese Aufgabe mit der Erfindung dadurch, daß bei einer gattungsgemäßen Brauereianlage als Heizeinrichtung eine über einen Verbrennungsmotor angetriebenen Kraftwärmekopplungsanlage vorgesehen ist.

Eine solche Kraftwärmekopplungsanlage, die einem Verbrennungsmotor die Energie zum Aufheizen der Würze entzieht, kann einfach betrieben werden und ermöglicht es, die Würze vor dem Einlaufen in die Würzepfanne bereits auf eine Würzetemperatur von nahezu 100° C aufzuheizen. Die Kraftseite des Verbrennungsmotors wird an Aggregate, wie z.B. einen Kälteverdichter, einen elektrischen Generator oder dergl. angeschlossen, die in der Brauereianlage benötigt werden, so daß insgesamt ein einfacher und auf die unterschiedlichen Verhältnisse abstimmbarer Betrieb einer Brauereianlage der genannten Art möglich wird.

In einer vorteilhaften Ausgestaltung der Erfindung ist vorgesehen, daß zwischen dem Wärmetauscher und der Kraftwärmekopplungsanlage wenigstens ein Speicher für das Heizmedium angeordnet ist. Als Heizmedium kann dabei beispielsweise Wasser verwendet werden. Mit dieser Maßnahme wird eine Zwischenspeicherung von Energie möglich, wenn einersits aus Gründen einer möglichst hohen Benutzungsdauer und einer möglichst geringen installierten Motorleistung der Verbrennungsmotor mit konstanter Last täglich mit 24 Stunden betrieben wird. d.h. durchgehend, andererseits aber dem Umstand Rechnung getragen werden soll, daß die Würzebereitung im allgemeinen noch immer im Chargenbetrieb vollzogen wird. Als Speicher können die unterschiedlichsten bekannten Arten von Wärmespeichern eingesetzt werden. Insbesondere lassen sich als Wasserspeicher Druckbehälter einsetzen, da es mit der erfindungsgemäßen Vorrichtung möglich ist, die Temperatur des Heizmediums, beispielsweise des Wassers, im Wasserspeicher mit Überdruck bis auf z.B. 107° C aufzuheizen. Als Druckbehälter lassen sich dabei Druckbehälter verwenden, die zur Gruppe 2 der Unfallverhütungsvorschriften zu rechnen sind und damit einer leichteren Prüfung unterliegen.

In einer weiteren sehr vorteilhaften Ausgestaltung der Erfindung ist vorgesehen, daß der Verbrennungsmotor über eine zu-und abschaltbare Kupplung an einen Kälteverdichter anschließbar ist, der auch zur Würzekühlung vorgesehen sein kann. Mit dieser Maßnahme ist es möglich, eine Kraft-Wärme-Kälte-Kopplung in der Brauereianlage zu erreichen. d.h., es läßt sich sowohl die Kraftwärmekopplungsanlage über denselben Verbrennungsmotor betreiben als auch der Kälteverdichter. Auf diese Art und Weise wird die Verknüpfung des Würzeaufheizens in der Brauereianlage einerseits mit der Würzekühlung der Brauereianlage andererseits über den ebenfalls verbrennungsmotorisch angetriebenen Kälteverdichter bewirkt. Über eine Kupplung läßt sich wahlweise entweder nur die Stromseite mit dem Verbrennungsmotor speisen, oder aber die Kälteseite der Brauereianlage oder aber auch beide Seiten.

Der Kälteverdichter kann dabei in der Zentralkälteanlage der Brauereianlage integriert. Insbesondere ist der Kälteverdichter in einen Kältemittelkreis mit einem Drosselventil, einem Kondensator und einer Seite eine Wärmetauschers gelegen, wobei der anderen Seite des Wärmetauschers Brauwasser zugeführt wird, das im Wärmetauscher abgekühlt und zur weiteren Abkühlung der Würze in einem weiteren Wärmetauscher eingesetzt wird. Dabei ist es auch für die Kälteseite im Hinblick auf den häufig im Chargenbetrieb vollzogenen Kochprozeß von Vorteil, wenn auch auf dieser Kälteseite ein Speicher für kaltes Brauwasser vorhanden ist.

Es ist aber auch möglich, die Würzekühlung über einen Eiswasserspeicher oder auch durch direkte Verdampfung des Kältemittels vorzunehmen.

In einer weiteren vorteilhaften Ausgestaltung der Erfindung ist vorgesehen, daß dem Verbrennungsmotor über eine zu-und abschaltbare Kupplung ein Generator zur Erzeugung elektrischer Energie zugeordnet ist. Durch diese Maßnahme besteht die Möglichkeit, beim Betrieb des Verbrennungsmotors entstehende mechanische Energie in elektrische Energie umzuwandeln und im Betrieb zu nutzen.

Des weiteren kann der Generator bei abgekoppeltem Verbrennungsmotor zum Antrieb des Kälteverdichters über eine Kupplung mit diesem Kälteverdichter verbindbar sein. Dies schafft die Möglichkeit, daß beim Betrieb des Generators als Elektromotor der Kälteverdichter auch über diesen Generator angetrieben werden kann.

Mit dem Einsatz von Kupplungen, beispielsweise elektromagnetischen Schaltkupplungen, zwischen dem Verbrennungsmotor und dem Generator sowie zwischen dem Generator und dem Verdichter und durch eine mögliche direkte Antriebsübertragung zwischen dem Verbrennungsmotor und dem Verdichter kann die gesamte Anlage in den unterschiedlichsten und jeweils für die benötigten Zwecke geeigneten Betriebsarten gefahren werden. Wenn der Verbrennungsmotor an den Generator und an den Kälteverdichter durchgeschaltet ist, wird Wärme, Strom und die Kälteerzeugung über den Verbrennungsmotor durchgeführt. Wenn der Generator vom Netz getrennt wird, wird vom Verbrennungsmotor nur die Wärme und die Kälte erzeugt. Wenn der Generator als E-Motor betrieben wird und der Verbrennungsmotor abgekoppelt ist, wird die Kälte über einen elektromotorischen Antrieb erzeugt. Wenn - schließlich der Verdichter abgekoppelt ist, wird Wärme und Strom über den Verbrennungsmotor erzeugt. Es ist klar, daß diese unterschiedlichen Varianten einen optimalen Betrieb der gesamten Brauereianlage nach den unterschiedlichsten Anforderungen ermöglicht.

Bei einer weiteren Ausgestaltung der Erfindung ist vorgesehen, daß die Kraftwärmekopplungsanlage zur Wärmeerzeugung für weitere Bereiche der Brauereianlage, beispielsweise die Flaschenreinigungsanlage eingesetzt wird. Wenn die Wärme des Verbrennungsmotors nicht zum Aufheizen der Würze benötigt wird, beispielsweise bei Stillstand oder beim Ruhen der Würzekochung, kann durch Betrieb des Verbrennungsmotors die Kraftwärmekopplungsanlage die an anderer Stelle der Brauereianlage benötigte Energie zur Verfügung stellen, beispielsweise zur Flaschenreinigung.

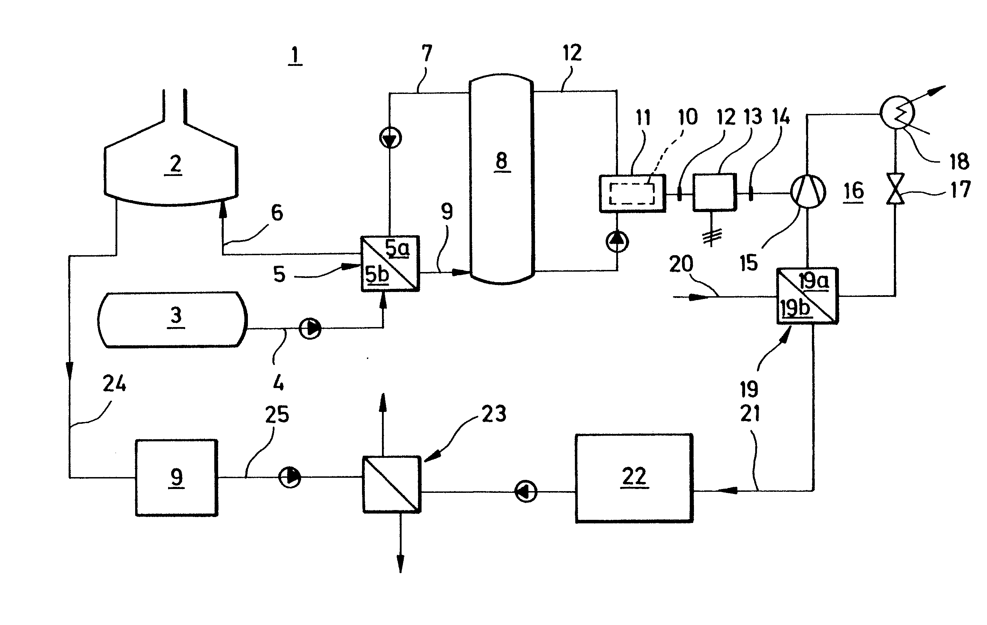

Die Erfindung wird im folgenden anhand des in der Zeichnung dargestellten Ausführungsbeispiels weiter erläutert und beschrieben.

In der einzigen Figur ist eine erfindungsgemäße Brauereianlage mit ihren erfindungswesentlichen Elementen schematisch dargestellt.

Die Anlage ist insgesamt mit dem Bezugszeichen 1 versehen und weist eine Würzepfanne 2 auf, in der beim Brauprozeß von Bier die Würze gekocht wird. Die Würze wird dabei aus einem Vorlaufgefäß 3 über eine Leitung 4 an einen Wärmetauscher 5 weitergegeben, wo sie in noch näher zu erläuternden Weise aufgeheizt und dann über eine Leitung 6 in die Würzepfanne 2 eingeleitet wird. Durch die Seite 5a des Wärmetauschers 5 strömt ein Heizmedium, das die Wärme an die Seite 5b des Wärmetauschers und damit an die der Würzepfanne 2 zugeführte Würze abgibt. Bei diesem Ausführungsbeispiel wird das Heizmedium über eine Leitung 7 einem Speicher 8 entnommen. Über eine Leitung 9 wird das Heizmedium nach Abgabe der Wärme im Wärmetauscher 5 wieder in den Speicher 8 zurückgeleitet, wo es erneut aufgewärmt wird. Die Aufheizung des Heizmediums wird über eine Kraftwärmekopplungsanlage 11 vorgenommen, die über einen Verbrennungsmotor 10 angetrieben wird. Der Verbrennungsmotor 10 gibt dabei die beim Verbrennungsvorgang, beispielsweise bei der Verbrennung von Diesel, Gas, Benzin oder dergl., entstehende Wärme an ein Wärmeübertragungsmedium ab, das dann in den Speicher 8 über eine Leitung 12 eingeleitet wird. Solche Kraftwärmekopplungsanlagen, die mit einem Verbrennungsmotor arbeiten, sind für sich bekannt und bedürfen daher hier keiner näheren Erläuterung.

Zur Kraftableitung wird der Verbrennungsmotor über eine Kupplung 12 an einen Generator 13 angeschlossen, der bei eingerückter Kupplung vom Verbrennungsmotor 10 angetrieben wird und dabei elektrische Energie erzeugt. Der elektrische Generator 13 steht über eine weitere Kupplung 14 mit einem Kälteverdichter 15 in Verbindung, so daß der Kälteverdichter 15 ebenfalls vom Verbrennungsmotor 10 angetrieben werden kann. Mit den Elementen 10, 12, 13, 14 und 15 findet somit eine Verknüpfung der Wärmeseite, die im wesentlichen aus der Kraftwärmekopplunganlage 11, dem Speicher 8, dem Wärmetauscher 5 und der Würzepfanne 2 besteht, mit der Würzekühlung, d.h. mit dem Kälteverdichter 15 und der damit in Verbindung stehenden Vorrichtungsteile zum Kühlen der Würze, die noch weiter erläutert werden, über einen Verbrennungsmotor statt.

Der Kälteverdichter 15 liegt in einem Leitungskreis 16, der in einer Reihenschaltung ein Drosselventil 17, einen Kondensator 18 und eine Seite 19a eines weiteren Wärmetauschers 19. In diesem Kältekreis 16 wird dem über eine Leitung 20 in den Wärmetauscher 19 zulaufenden Brauwasser Energie entzogen, wobei das Brauwasser abkühlt und dann über eine Leitung 21 an einen Speicher für kaltes Brauwasser 22 weitergeleitet werden kann, wo es zwischengespeichert wird. Dieses kalte Brauwasser kann dann in einem weiteren Wärmetauscher 23 dazu verwendet werden, die aus der Würzepfanne 2 über die Leitung 24 in einen Whirlpool 9 eingeleitete Würze, die aus dem Whirlpool über eine Leitung 25 zum Wärmetauscher 23 weitergeleitet wird, abzukühlen. Der Speicher 22 kann auch als Eiswasserspeicher ausgebildet sein.

Das im Speicher 8, der beispielsweise ein Verdrängungsspeicher sein kann oder aber auch aus zwei einzelnen hintereinander geschalteten Speicherelementen bestehen kann, gespeicherte Heizmedium wird durch Umpumpen über die Kraftwärmekopplungsanlage 11 geführt, wo die Abwärme des Motors 10 das Heizmedium aufheizt. Dabei kann das Heizmedium beispielsweise bis auf 107° C aufgeheizt werden, so daß das aufgewärmte Heizmedium im oberen Teil des Wärmespeichers 8 eine Temperatur von 107° C erhalten kann. Im unteren Teil des Speichers 8 liegt dann das kältere Wasser, beispielsweise mit 77° C vor. Das 107° C heiße Wasser wird über die Leitung 7 an den Wärmetauscher 5 weitergegeben. Durch den Wärmetauscher 5 wird ebenfalls die im Vorlaufgefäß mit ca. 72° C bis 75° C vorliegende Läuterwürze hindurchgepumpt und dabei von dem Heißwasser auf 100° C aufgeheizt. Dadurch strömt über die Leitung 6 bereits auf 100° C aufgewärmte Würze in die Würzepfanne 2. Das Aufheizen der Würze auf 100° C nimmt in der Regel einen Zeitraum von 20 bis 30 Minuten in Anspruch und wird, wie geschildert, durch Umpumpen der Würze aus dem Vorlaufgefäß 10 über den Wärmetauscher 12 in die Würzepfanne 11 vollzogen.

Über den Heißwasserspeicher 8 ist es möglich, die zwischen zwei Aufheizvorgängen anfallende Motorabwärme des Verbrennungsmotors 10 zu speichern, um sie dann innerhalb von 20 bis 30 Minuten an die Würze abzugeben.

Diese Aufheizintervalle richten sich nach der Sudhausausstattung und der damit erreichbaren Sudfolge.

Nach dem Kochen der Würze in der Würzepfanne 2 gelangt die Würze über einen Whirlpool 9 an einen Wärmetauscher 23, wo sie von einer Temperatur von 95° C, mit der sie noch im Whirlpool vorliegt, auf eine Temperatur von beispielsweise 7° C abgekühlt wird.

Um eine solche Kühlung vollziehen zu können, ist der Verbrennungsmotor 10 über die Kupplungen 12 und 14 an den Kälteverdichter 15 anschließbar, der im Kreislauf 16 ein Kältemittel umwälzt. Im Wärmetauscher 19 wird mit diesem Kältemittel dann beispielsweise mit 12° C ankommendes Brauwasser aus der Leitung 20 abgekühlt, so daß dieses dann abgekühlte Brauwasser beispielsweise mit 3° C in einem Zwischenspeicher 22 abgespeichert werden kann. Die Kälteleistung des Verdichters 16 sollte mindestens so hoch sein, daß über dem Verdampfer 18 eine entsprechend große Menge Brauwasser vorgekühlt werden kann, um damit die heiße Ausschlagwürze eines Sudes am Wärmetauscher 23 kühlen zu können.

Da die Würzekühlung nicht kontinuierlich abläuft, ist der Zwischenspeicher 22 für das kalte Brauwasser vorgesehen. Im Speicher kann das Brauwasser dann mit 3° C vorliegen.

Um die überschüssige mechanische Energie des Verbrennungsmotors 10 ausnützen zu können, kann die bei Antrieb des Generators 13 erzeugte elektrische Energie in das Betriebsnetz der Brauerei eingespeist werden.

Selbstverständlich ist es auch möglich, den Verbrennungsmotor 10 durch Überbrückung des Generators 13 unmittelbar an den Kälteverdichter 15 aufzuschalten.

Die Verwendung eines Verbrennungsmotors 10 zum Aufheizen der Würze einerseits und zum gleichzeitigen Antrieb eines Kälteverdichters für die Kälteseite der Anlage erlaubt es in wirtschaftlicher Weise unter Einsparung von Energie, einen Teil der Brauereianlage zu betreiben. Die Verwendung des Generators 13 schafft außerdem die Möglichkeit der Eigenstromerzeugung bei Einbindung dieses Generators 13 zwischen dem Verbrennungsmotor 10 und dem Kälteverdichter 16.

Der verwendete Warmwasserspeicher 8 einerseits und Kaltwasserspeicher 22 andererseit ermöglicht es, aus Gründen einer möglichst hohen Benutzungsdauer und einer möglichst geringen installierten Motorleistung (geringere Investitionskosten) den Verbrennungsmotor mit konstanter Last über täglich 24 Stunden zu betreiben. Trotzdem kann die Würzebereitung weiterhin im Chargenbetrieb vollzogen werden, was durch den Einsatz von Speichern 8 auf der heißen bzw. dem Speicher 22 auf der kalten Seite des Systems möglich ist. Die Größe und Bauart der Speicher, die installierte Motor-, Generator-und Kälteverdichterleistung sowie die Leistung der Wärmetauscher hängen selbstverständlich von der Höhe der Ausschlagwürzemenge pro Sud und der täglichen Sudzahl (Ausschlagrhythmus) ab. Der Einsatz des Verbrennungsmotors und der Kraftwärmekopplungsanlage 11 ermöglicht außerdem die Erzeugung von Warmwasser, das in weiteren Anlagen der gesamten Brauerei benötigt wird, beispielsweise für die Flaschenreinigungsanlage.

## Ansprüche

1. Brauereianlage mit einer Würzepfanne, mit einem Wärmetauscher zum Aufheizen der der Würzepfanne zugeführten Läuterwürze und mit einer Heizeinrichtung zum Aufheizen eines Heizmediums, das im Wärmetauscher zur Aufheizung der Läuterwürze dient,
dadurch **gekennzeichnet**,
, daß als Heizeinrichtung eine über einen Verbrennungsmotor (10) angetriebene Kraftwärmekopplungsanlage (11) vorgesehen ist.

2. Anlage nach Anspruch 1,
dadurch **gekennzeichnet**,
daß zwischen dem Wärmetauscher (5) und der Kraftwärmekopplungsanlage (11) wenigstens ein Speicher (8) für das Heizmedium angeordnet ist.

3. Anlage nach Anspruch 1 oder 2,
dadurch **gekennzeichnet**,
daß der Verbrennungsmotor (10) über eine zu-und abschaltbare Kupplung (12, 14) an einen Kälteverdichter (15) anschließbar ist, der auch zur Würzekühlung vorgesehen ist.

4. Anlage nach Anspruch 3,
dadurch **gekennzeichnet**,
daß der Kälteverdichter (15) in der Zentralkälteanlage (16) der Anlage integriert ist.

5. Anlage nach Anspruch 4.
dadurch **gekennzeichnet**,
daß der Kälteverdichter in einem Kältemittelkreis (16) mit einem Drosselventil (17), einem Kondensator (18) und einer Seite eines Wärmetauschers (19) liegt, wobei der anderen Seite (19b) des Wärmetauschers (19) Brauwasser zugeführt wird, das im Wärmetauscher (19) abgekühlt wird.

6. Anlage nach Anspruch 5.
dadurch **gekennzeichnet**,
daß ein Kaltwasserspeicher (22) für das am Wärmetauscher (19) abgekühlte Brauwasser vorgesehen ist.

7. Anlage nach Anspruch 5.
**gekennzeichnet** durch
einen Eiswasserspeicher, in dem die im Wärmetauscher (19) abgeführte Wärme in Form von Eis abgespeichert wird.

8. Anlage nach wenigstens einem der vorangegangenen Ansprüche.
dadurch **gekennzeichnet**.
daß dem Verbrennungsmotor (10) über eine zu-und abschaltbare Kupplung (14) ein Generator (13) zur Erzeugung elektrischer Energie zugeordnet ist.

9. Anlage nach Anspruch 8,
dadurch **gekennzeichnet**,
daß bei abgekoppeltem Verbrennungsmotor der Generator (13) als Elektromotor zum Antrieb des Kälteverdichters (15) über eine Kupplung (14) mit dem Kälteverdichter (15) verbindbar ist.

10. Anlage nach wenigstens einem der vorangegangenen Ansprüche,
dadurch **gekennzeichnet**,
daß die Kraftwärmekopplungsanlage (11) zur Wärmeenergieerzeugung für weitere Bereiche der Brauereianlage, insbesondere die Flaschenreinigungsanlage, eingesetzt wird.